# EUROPÄISCHE PATENTSCHRIFT

(11) **EP 0 689 010 B1**
(45) Veröffentlichungstag und Bekanntmachung des Hinweises auf die Patenterteilung: **11.08.1999**
(21) Anmeldenummer: 95250137.7
(22) Anmeldetag: 08.06.1995
(51) Int. Cl.: F23L 13/02, F23L 11/00, F16K 1/226, F16J 15/08, F16J 15/06

(54) **Dichtungsanordnung in einer Rauchgasarmatur**
Sealing structure for a flue gas valve
Dispositif d'étanchéité pour une soupape de fumée

(30) Priorität: 22.06.1994 DE 4423330
(43) Veröffentlichungstag der Anmeldung: 27.12.1995
(73) Patentinhaber: MANNESMANN Aktiengesellschaft, 40213 Düsseldorf (DE)
(72) Erfinder: Starke, Wilfried, D-59320 Enningerloh (DE)
(74) Vertreter: Presting, Hans-Joachim, Dipl.-Ing.

(56) Entgegenhaltungen:
- EP-A- 0 340 430
- DE-A- 3 815 404
- DE-C- 4 204 516
- FR-A- 2 424 457
- GB-A- 1 598 427

## Beschreibung

Die Erfindung betrifft eine Dichtunganordnung in einer Rauchgasarmatur gemäß dem Gattungsbegriff des Patentanspruchs 1.

Eine gattungsgemäße Dichtungsanordnung ist aus der DE 38 15 404 A1 bekannt. Sie weist einen an dem jeweiligen Klappenflügel angeordneten umlaufenden Flügeldichtsitz und einen entsprechenden, mit diesem zusammenwirkenden feststehenden Gegendichtsitz am Gehäuse der Rauchgasarmatur auf. In der Sperrstellung liegen beide Dichtsitze unmittelbar aufeinander. Da die Rauchgasarmaturen für Rauchgaskanäle mit sehr großen Querschnittsflächen (z.B. 50 bis 100 m²) eingesetzt werden, kann es durch Staubablagerungen und Verspannungen vorkommen, daß die Flächen der Dichtsitze nicht plan aufeinanderliegen, wenn die Dichtflächen der Dichtsitze völlig starr ausgebildet sind. Um die auf diese Weise entstehenden Undichtigkeiten zu vermeiden, weist die aus der DE 38 15 404 A1 bekannte Dichtungsanordnung an einem der beiden Dichtsitze, im Regelfall an dem Gegendichtsitz des Gehäuses der Rauchgasarmatur, einen konvex gegen den anderen Dichtsitz gewölbten Federstahlblechstreifen auf, an dem der andere Dichtsitz, also im Regelfall der Flügeldichtsitz, in der Sperrstellung des Klappenflügels anliegt. Der konvex gewölbte Federstahlblechstreifen kann sich unter Druckwirkung des Flügeldichtsitzes diesem genau anpassen und dichtet somit zuverlässig ab. Der Federstahlblechstreifen der bekannten Dichtungsanordnung ist mit zwei in Längsrichtung verlaufenden Knicken von 90 ^{o} versehen und ist im Montagezustand im Querschnitt zu einem geschlossenen Hohlprofil gebogen. Beide Längsseiten des Federstahlblechstreifens sind (beispielsweise mittels angeschraubter Klemmleiste) fest eingespannt. Diese Art der Befestigung führt dazu, daß das Hohlprofil des Federstahlblechstreifens eine beträchtliche Federsteifigkeit aufweist und die von dem anliegenden Klappenflügel bewirkten Verformungen sehr hohe Biegespannungen hervorrufen.

Insbesondere bei Rauchgasarmaturen, bei denen die Dichtsitze starken Druckwechselbeanspruchungen unterliegen (z.B. Jalousieklappen) kann es unter ungünstigen Umständen zu einem Bruch des Federstahlblechstreifens und somit zur Undichtigkeit der Armatur kommen, so daß eine Reparatur erforderlich wird.

Aufgabe der Erfindung ist es, eine gattungsgemäße Rauchgasarmatur so zu verbessern, daß die Gefahr eines Bruchs des Federstahlblechstreifens der Dichtungsanordnung wesentlich vermindert wird.

Gelöst wird diese Aufgabe erfindungsgemäß mit den kennzeichnenden Merkmalen des Anspruchs 1. Vorteilhafte Weiterbildungen der Erfindung sind in den Unteransprüchen 2 bis 6 angegeben.

Der Erfindung liegt die Erkenntnis zugrunde, daß die Biegebeanspruchung des Federstahlblechstreifens trotz Beibehaltung seiner konvexen Wölbung gegen den korrespondierenden Dichtsitz wesentlich vermindert werden kann, wenn nur eine seiner beiden Längsseiten fest eingespannt wird, während die andere Längsseite unter der Druckeinwirkung des Klappenflügels auf der Befestigungsunterlage des Federstahlblechstreifens gleitend ausweichen kann, so daß sich die konvexe Wölbung leicht der Form der mit ihr zusammenwirkenden Dichtfläche anpassen kann.

Anhand der in den Fig. 1 bis 6 dargestellten Ausführungsbeispiele wird die Erfindung nachfolgend näher beschrieben. Es zeigen:
- Fig. 1 bis 5: schematische Darstellungen von Dichtsitzen mit unterschiedlich geformten Federstahlblechstreifen und
- Fig. 6: einen Ausschnitt aus einer Rauchgasarmatur mit einer erfindungsgemäßen Dichtungsanordnung.

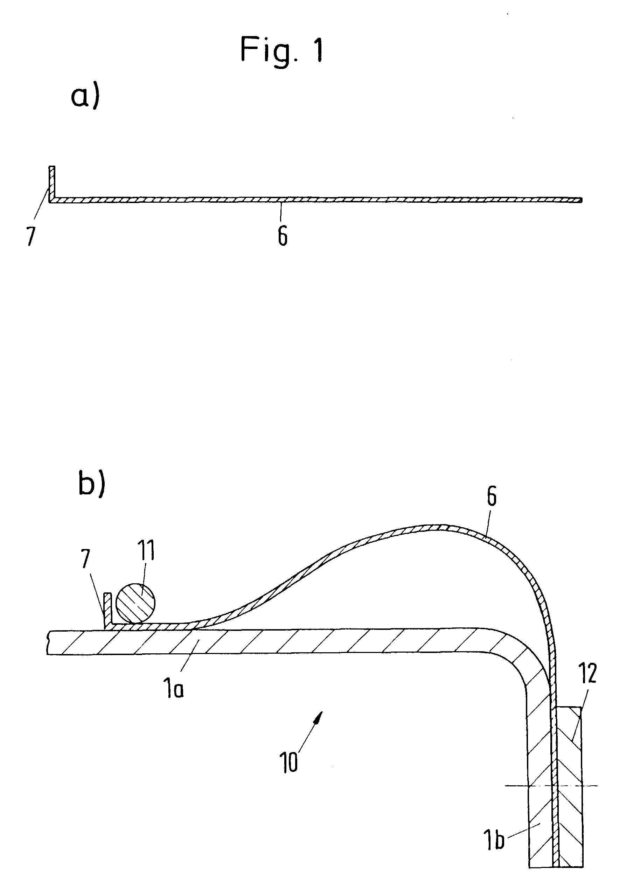

In den Fig. 1 bis 5 ist jeweils in einer Teildarstellung a) ein Querschnitt durch einen nichtmontierten Federstahlblechstreifen wiedergegeben, während die Teildarstellung b) und ggf. c) den zugehörigen Querschnitt im montierten Zustand zeigt. Der Federstahlblechstreifen 6 in Fig. 1a hat eine im wesentlichen plane Form und weist lediglich an seiner linken Längsseite einen Längsknick 7 auf, dessen Funktion aus Fig. 1b hervorgeht. Um die gewünschte konvex (gegen den nicht dargestellten Flügeldichtsitz) gebogene Form des Federstahlblechstreifens 6 zu erzielen, muß das am (ebenfalls nicht dargestellten) Armaturengehäuse befestigte, den Gegendichtsitz 10 bildende Profil eine etwa L-förmige Querschnittsform haben, also zusätzlich zu der flachen Auflagerfläche 1a einen z.B. rechtwicklig abgewinkelten freien Schenkel 1b aufweisen. Die rechte Längsseite des Federstahlblechstreifens 6 ist mittels einer angeschraubten Klemmleiste 12 fest auf den vertikal gerichteten freien Schenkel 1b gespannt. Der Federstahlblechstreifen 6 ist bei der Montage unter elastischer Verformung nach links gebogen worden, bis er an seiner linken Längsseite auf der horizontalen Auflagerfläche 1a des Dichtsitzes 10 flach aufliegt. Er wölbt sich konvex über der Auflagerfläche 1a und wird in dieser Position durch einen Niederhalter 11 gehalten. Der Niederhalter 11 klemmt den Federstahlblechstreifen 6 nicht fest, sondern hält ihn lediglich im Sinne einer Gleitführung. Damit der Federstahlblechstreifen 6 nicht unter dem Niederhalter 11 aus der Gleitführung nach rechts herausrutschen kann, weist er eine Sicherung auf, die in diesem Fall als Längsknick 7 ausgeführt ist. Es wäre selbstverständlich auch möglich, eine andere Form eines Anschlags vorzusehen (z.B. Verdickung).

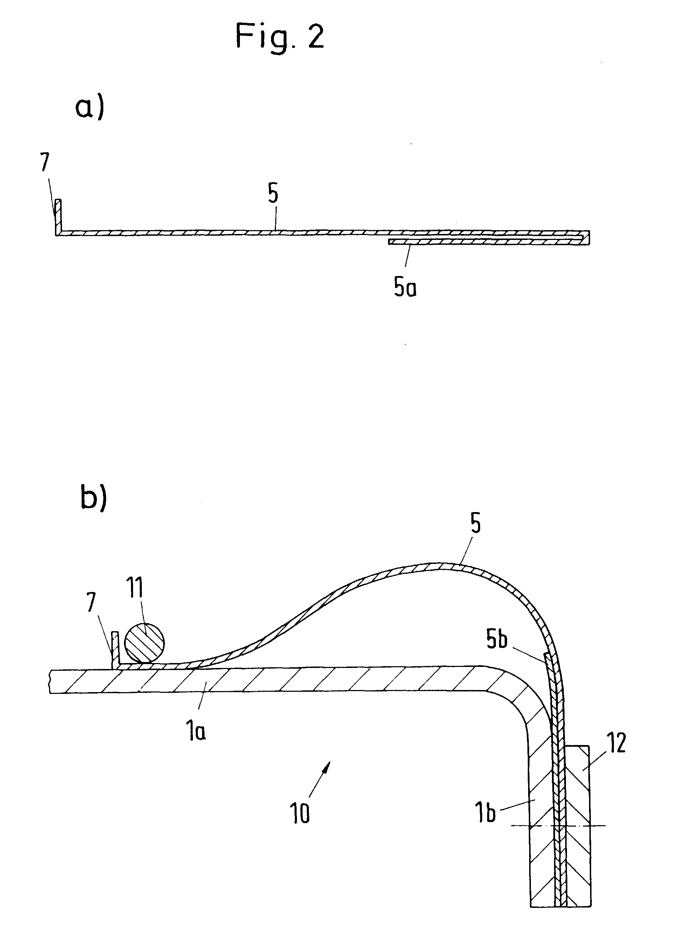

Die in Fig. 2 dargestellte Ausführungsform unterscheidet sich von derjenigen der Fig. 1 lediglich dadurch, daß der Federstahlblechstreifen 5 durch einen zusätzlichen schmaleren Federstahlblechstreifen 5a, der an einer Längsseite bündig mit dem Federstahlblechstreifen 5 zusammengelegt ist, gestützt wird. Hierdurch wird die Federsteifigkeit im Nahbereich der Einspannstelle gegenüber dem ungestützten Teil des Federstahlblechstreifens 5 erhöht. Dies führt zu einer vergleichsweise steileren konvexen Auswölbung.

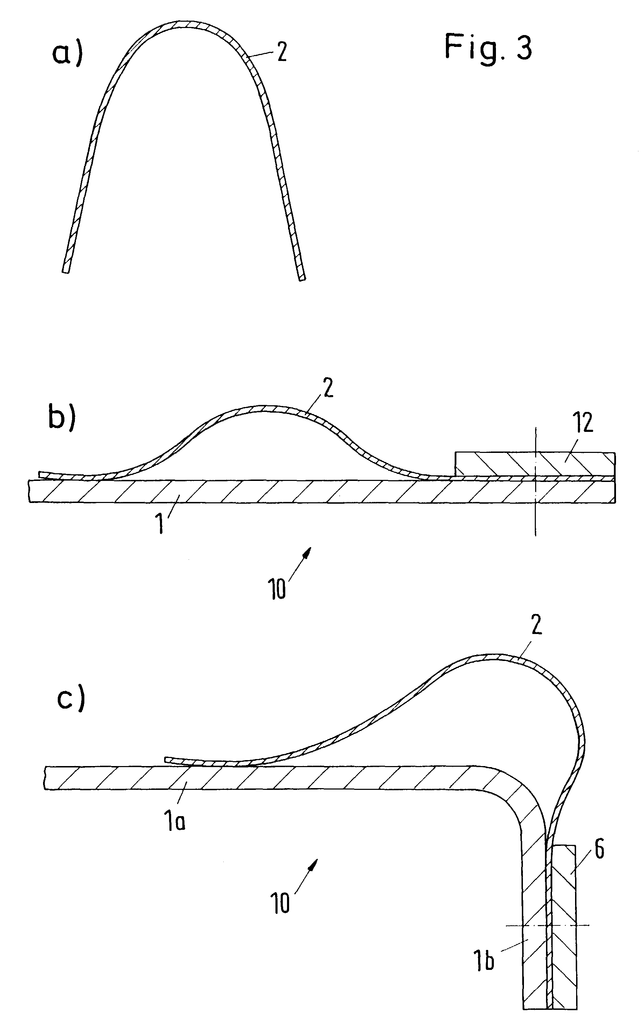

Die Ausführungen der Fig. 3 bis 5 unterscheiden sich von der Ausführung in Fig. 1 im wesentlichen dadurch, daß die Federstahlblechstreifen alle eine bleibende Vorverformung im unmontirten Zustand aufweisen, und zwar eine Vorverformung quer zur Längsrichtung, die als Auswölbung oder Ausknickung ausgebildet ist. Sie verläuft im wesentlichen im mittleren Bereich über die gesamte Länge des Federstahlblechstreifens.

In Fig. 3a ist diese Auswölbung des Federstahlblechstreifens 2 etwa U-förmig ausgebildet. Aufgrund dieser Vorverformung kann der Federstahlblechstreifen 2 selbst dann noch eine konvexe Form annehmen, wenn er auf einem Dichtsitz 10 aufliegt, der lediglich eine ebene Auflagerfläche 1 aufweist, auf dem die rechte Längsseite festgeklemmt ist (Fig. 3b). Es ist aber auch möglich, diesen Federstahlblechstreifen 2 ähnlich wie in Fig. 1b an einem L-förmigen Dichtsitz 10 anzubringen (Fig. 3c).

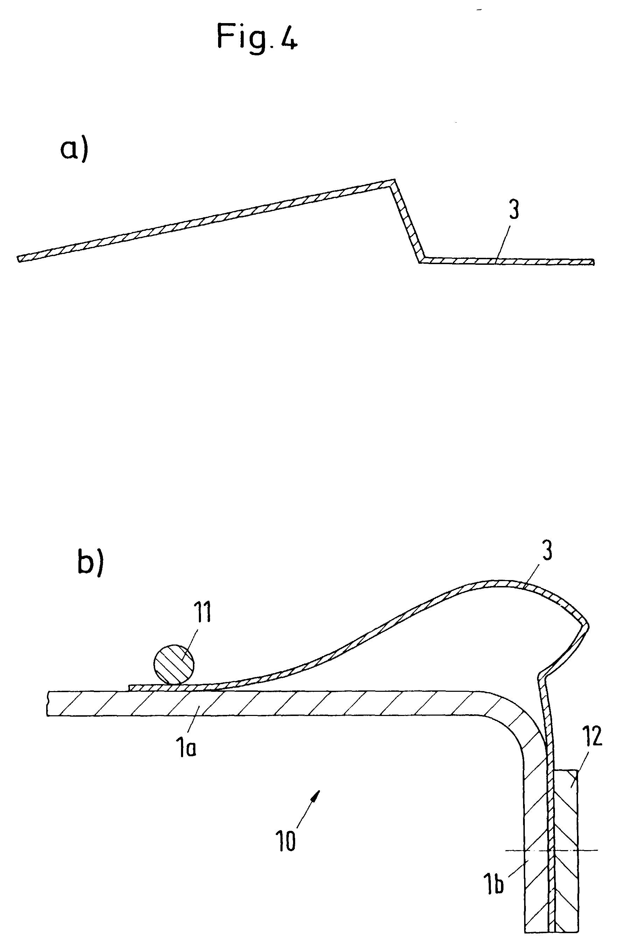

Fig. 4 zeigt eine weitere Variante, bei der der Federstahlblechstreifen 3 mit zwei gegensinnigen Längsknicken versehen ist. Dies führt, wie Fig. 4 b erkennen läßt, zu einer höheren Wölbung über der Auflagerfläche 1a.

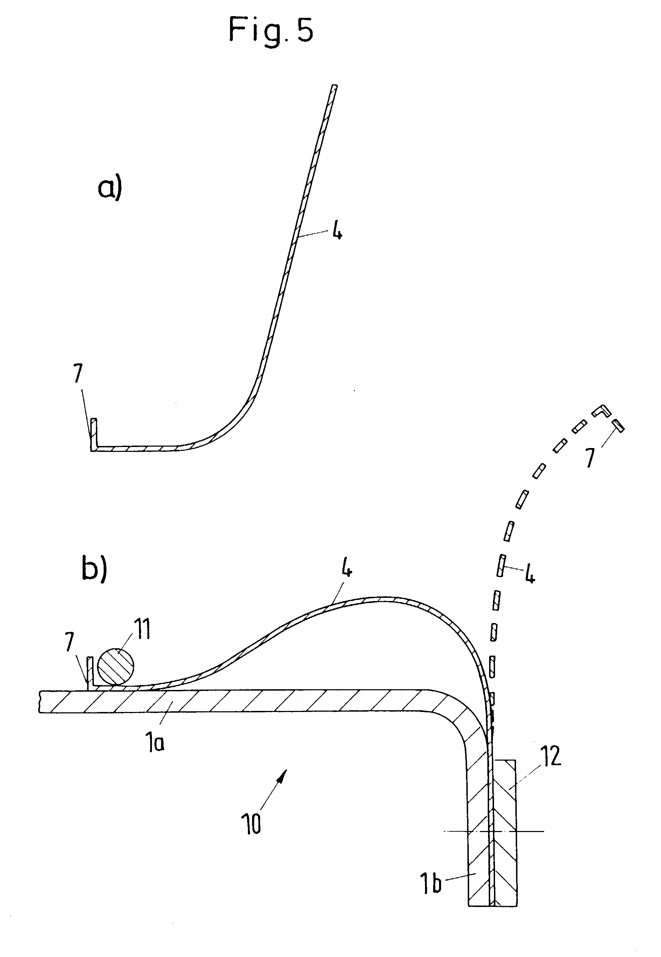

Bei der Ausführung gemäß Fig. 5 wurde lediglich die linke Hälfte des Federstahlblechstreifens 4 gewölbt. Im nur einseitig eingespannten Zustand (gestrichelte Darstellung in Fig. 5b) zeigt die freie Längsseite des Federstahlblechstreifens nach rechts und nimmt im fertigmontierten Zustand die ausgezogen dargestellte Form an.

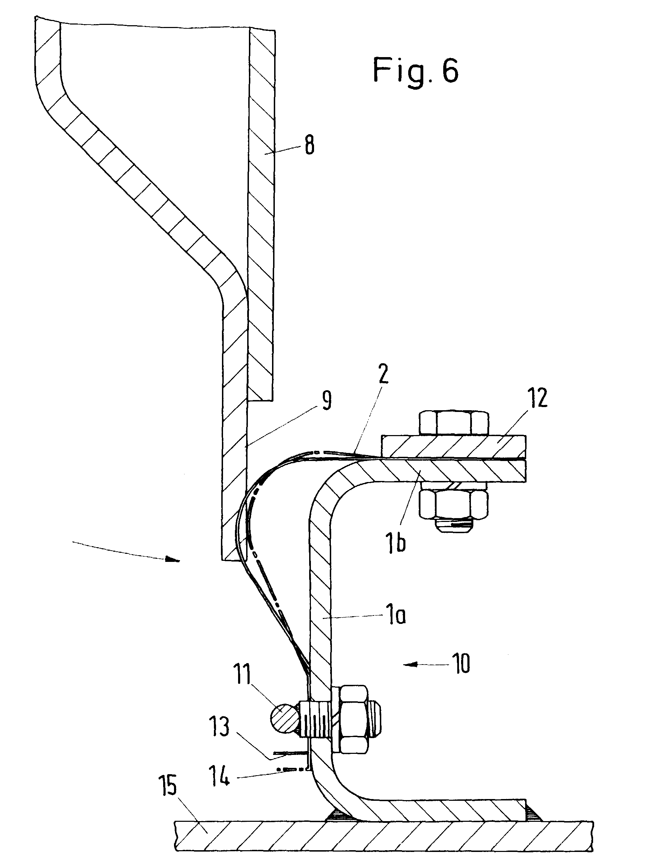

In Fig. 6 schließlich ist ein Ausschnitt aus einer Rauchgasarmatur mit der erfindungsgemäßen Dichtungsanordnung dargestellt. Der L-förmige Dichtsitz 10 ist Teil eines U-Profils, das an dem Gehäuse 15 der Rauchgasarmatur angeschweißt ist. Der Federstahlblechstreifen 2, der über die angeschraubte Klemmleiste 12 auf dem freien Schenkel 1b fest eingespannt ist, wird an seiner linken Längsseite gleitbar von dem ebenfalls angeschraubten Niederhalter 11 auf der Auflagerfläche 1a gehalten. In geöffneter Stellung des Klappenflügels 8 weist der Federstahlblechstreifen 2 die dick ausgezogene Form auf. Sein linker Längsrand liegt an der durch die gestrichelte Linie 13 markierten Stelle. In der Schließstellung des Klappenflügels 8 liegt deren Dichtsitz 9 fest auf dem Federstahlblechstreifen 2 auf und verformt letzteren in der strichpunktiert dargestellten Weise. Dabei kann die linke Längsseite des Federstahlblechstreifens 2 gleitend nach links ausweichen und liegt dann in der gestrichelt markierten Stellung 14.

Durch die erfindungsgemäß gestaltete Dichtungsanordnung wird die Bruchgefahr fUr den Federstahlblechstreifen drastisch reduziert, wobei die Kosten für die Dichtungsanordnung sogar noch vermindert werden.

## Patentansprüche

1. Dichtungsanordnung in einer Rauchgasarmatur, insbesondere in einer Absperrarmatur in Form einer Jalousieklappe, mit mindestens einem bewegbaren Klappenflügel (8), der mit seinem Flügeldichtsitz (9) an einem entsprechenden feststehenden Gegendichtsitz (10) des Armaturengehäuses (15) dichtend zur Anlage bringbar ist, wobei der Flügeldichtsitz (9) oder der Gegendichtsitz (10) mit einem elastisch verformbaren und nach außen konvex über dem jeweiligen Dichtsitz sich wölbenden Federstahlblechstreifen (2 bis 6), der eine erste und eine zweite Längsseite aufweist, belegt ist und die erste Längsseite des Federstahlblechstreifens (2 bis 6) an dem den jeweiligen Dichtsitz bildenden Teil eingespannt ist,
dadurch gekennzeichnet,
daß die zweite Längsseite des Federstahlblechsstreifens (2-6) gleitbar auf dem Teil befestigt ist, an dem die erste Längsseite des Federstahlblechstreifens (2-6) eingespannt ist.

2. Dichtungsanordnung nach Anspruch 1,
dadurch gekennzeichnet,
daß die zweite Längsseite des Federstahlblechstreifens (2 bis 6) durch einen Niederhalter (11) auf den Gegendichtsitz (10) gedrückt wird.

3. Dichtungsanordnung nach einem der Ansprüche 1 bis 2,
dadurch gekennzeichnet,
daß das den Federstahlblechstreifen (2 bis 6) tragende Teil ein Blechprofil ist, das im Querschnitt einen von der Auflagerfläche (1a) des Dichtsitzes (10) abgewickelten freien Schenkel (1b) aufweist, auf dem die feste Einspannung angeordnet ist.

4. Dichtungsanordnung nach einem der Ansprüche 2 bis 3,
dadurch gekennzeichnet,
daß der Federstahlblechstreifen (2 bis 6) an seiner gleitbar aufliegenden Längsseite eine Sicherung gegen ein Herausrutschen aus der durch den Niederhalter (11) gebildeten Gleitführung aufweist.

5. Dichtungsanordnung nach Anspruch 4,
dadurch gekennzeichnet,
daß die Sicherung als Längsknick (7) am äußersten Längsrand des Federstahlblechstreifens (4, 5, 6) ausgebildet ist.

6. Dichtungsanordnung nach einem der Ansprüche 1 bis 5,
dadurch gekennzeichnet,
daß der Federstahlblechstreifen (2 bis 6) im unmontierten Zustand über seine gesamte Länge eine bleibende Vorverformung im Sinne einer quer zur Längsrichtung verlaufenden und im wesentlichen im mittleren Bereich des Federstahlblechstreifens (2 bis 6) angeordneten Auswölbung oder Ausknickung aufweist.

## Claims

1. Sealing arrangement in a flue gas valve, in particular in a check valve in the form of a louvered flap valve, having at least one movable flap (8), which with its flap sealing seat (9) is capable of being brought to rest against a corresponding fixed counter-sealing seat (10) of the valve housing (15) in a sealing-tight manner, wherein the flap sealing seat (9) or the counter-sealing seat (10) is equipped with a resiliently deformable spring steel sheet strip (2 to 6), which protrudes convexly over the respective sealing seat and which has a first and a second longitudinal side, and the first longitudinal side of the spring steel sheet strip (2 to 6) is braced on the part forming the respective sealing seat, characterised in that the second longitudinal side of the spring steel sheet strip (2-6) is fixed slidably on the part on which the first longitudinal side of the spring steel sheet strip (2-6) is braced.

2. Sealing arrangement according to claim 1, characterised in that the second longitudinal side of the spring steel sheet strip (2 to 6) is pressed on to the counter-sealing seat by a holding-down member (11).

3. Sealing arrangement according to one of claims 1 to 2, characterised in that the part carrying the spring steel sheet strip (2 to 6) is a sheet-metal profile, which has in cross-section a free shank (1b) unwound by the support face (la) of the sealing seat (10) on which shank the fixed restraint is disposed.

4. Sealing arrangement according to one of claims 2 to 3, characterised in that the spring steel sheet strip (2 to 6) has on its slidably resting longitudinal side a safety device to prevent slipping out of the sliding guide formed by the holding-down member (11).

5. Sealing arrangement according to claim 4, characterised in that the safety device is formed as a longitudinal bend (7) on the outermost longitudinal edge of the spring steel sheet strip (4, 5, 6).

6. Sealing arrangement according to one of claims 1 to 5, characterised in that the spring steel sheet strip (2 to 6) in the unassembled state has over its entire length a permanent pre-deformation in the form of a convexity or outward bend extending transverse to the longitudinal direction and substantially disposed in the middle region of the spring steel sheet strip (2 to 6).

## Revendications

1. Dispositif d'étanchéité dans une valve de gaz de fumée, en particulier dans une valve de fermeture sous forme d'un volet à claire-voie, comportant au moins une partie de volet mobile (8), qui, par son siège d'étanchéité (9), peut être amenée en appui de façon étanche contre un contre-siège d'étanchéité (10) correspondant fixe du boîtier (15) de la valve, le siège d'étanchéité (9) ou le contre-siège d'étanchéité (10) étant garni d'une bande de tôle en acier à ressort (2 à 6) élastiquement déformable et se courbant vers l'extérieur de façon convexe sur le siège d'étanchéité respectif, bande qui présente un premier côté longitudinal et un second côté longitudinal, et le premier côté longitudinal de la bande de tôle en acier à ressort (2 à 6) étant fixé sur la partie formant le siège d'étanchéité respectif,
caractérisé en ce que le second côté longitudinal de la bande de tôle en acier à ressort (2-6) est fixé de façon coulissante sur la partie sur laquelle le premier côté longitudinal de la bande de tôle en acier à ressort (2-6) est fixé.

2. Dispositif d'étanchéité selon la revendication 1,
caractérisé en ce que le second côté longitudinal de la bande de tôle en acier à ressort (2 à 6) est pressé par un serre-flan (11) sur le contre-siège d'étanchéité (10).

3. Dispositif d'étanchéité selon une des revendications 1 à 2,
caractérisé en ce que la partie portant la bande de tôle en acier à ressort (2 à 6) est un profilé en tôle qui présente, en section transversale, une branche libre (1b) déroulée de la surface d'appui (1a) du siège d'étanchéité (10), sur laquelle est agencé le moyen de serrage fixe.

4. Dispositif d'étanchéité selon une des revendications 2 à 3,
caractérisé en ce que la bande de tôle en acier à ressort (2 à 6) présente, sur son côté longitudinal reposant de façon coulissante, une sécurité contre un échappement hors du guide de coulissement formé par le serre-flan (11).

5. Dispositif d'étanchéité selon la revendication 4,
caractérisé en ce que la sécurité est réalisée comme coude longitudinal (7) sur le bord longitudinal le plus externe de la bande de tôle en acier à ressort (4,5,6).

6. Dispositif d'étanchéité selon une des revendications 1 à 5,
caractérisé en ce que la bande de tôle en acier à ressort (2 à 6) présente, dans l'état non monté, sur toute sa longueur, une pré-déformation constante dans le sens d'un coude ou courbure s'étendant transversalement à la direction longitudinale et prévu généralement dans la zone médiane de la bande de tôle en acier à ressort (2 à 6).
